# EUROPEAN PATENT SPECIFICATION

(11) **EP 4 152 257 B1**
(45) Date of publication and mention of the grant of the patent: **22.10.2025**
(21) Application number: 20935750.8
(22) Date of filing: 13.05.2020
(51) Int. Cl.: G06T 7/20, G08B 21/24, G06V 40/20

(54) **HAND-WASH RECOGNITION SYSTEM AND HAND-WASH RECOGNITION METHOD**
HANDWASCHERKENNUNGSSYSTEM UND HANDWASCHERKENNUNGSVERFAHREN
SYSTÈME DE RECONNAISSANCE DE LAVAGE DE MAINS ET PROCÉDÉ DE RECONNAISSANCE DE LAVAGE DE MAINS

(43) Date of publication of application: 22.03.2023
(73) Proprietor: FUJITSU LIMITED, Kawasaki-shi, Kanagawa 211-8588 (JP)
(72) Inventor: SUZUKI, Genta, Kawasaki-shi, Kanagawa 211-8588 (JP)
(74) Representative: Hoffmann Eitle
(86) International application number: PCT/JP2020/019081
(87) International publication number: WO 2021/229710

(56) References cited:
- WO-A1-2020/044351
- CN-A- 109 726 668
- CN-A- 109 726 668
- JP-A- 2019 219 554
- JP-A- 2019 219 554
- US-A- 6 038 331

## Description

### Technical Field

The invention is related to a system, a method, and a program for monitoring a hand-washing motion of a person.

### Background Art

"Handwashing" is one of public health management behaviors and has been attracting attention from the viewpoint of preventing a viral pandemic, food poisoning, or the like. For example, the Ministry of Health, Labour and Welfare presents a hygienic hand-washing method. Meanwhile, the Hazard Analysis and Critical Control Point (HACCP) requires food-related businesses to check, monitor, and record public health management behaviors.

In such a situation, a handwash monitoring method including the following steps is proposed. The image acquisition step acquires hand-washing images captured by an imaging means installed in a sink for a handwash. The hand region extraction step extracts a hand region from the acquired hand-washing images to generate a frame image. The handwash start decision step decides whether a handwashing has started from the frame image. The washing method recognition step identifies the type of washing method performed by extracting the shape of the hand region from the frame image. The scrubbing decision step decides whether the scrubbing state about the washing method is good or bad by adding the number of seconds to the washing method when the identified washing method is a washing method of specified order. The handwash end decision step decides the end of the handwashing from the frame image (For example, Patent Document 1).

In addition, Patent Document 2 describes a method for prompting a user to perform an appropriate handwashing depending on the situation in which the user performs handwash. Patent Document 3 describes a method for causing a worker to perform a handwash with correct behavior.

### List of Prior Art Documents

### Patent Documents

Patent Document 1: Japanese Laid-Open Patent Publication No. 2017-134712
Patent Document 2: Japanese Laid-Open Patent Publication No. 2013-180046
Patent Document 3: Japanese Laid-Open Patent Publication No. 2019-219554
Patent Document 4: US6038331A describes monitoring hand washing wherein a subject's hands are checked after soap was applied and spread over the front and back the hands. An optical image of the subject's hands is digitized and compared, pixel by pixel, with a reference feature that distinguishes the soap and a report is generated indicating whether the subject's hands are covered with enough soap or detergent to receive a satisfactory report.
Patent Document 5: CN109726668A describes automatically detecting standardization of a hand washing and disinfecting process based on computer vision. The method comprises fixing a camera and detecting whether a faucet discharges water or not. Then it is detected whether the hand is flushed in water and the flushing time of the hand. Further it is detected whether hand sanitizer is collected or not. Also, it is detected whether enough foam is generated in the scrubbing process of the hand and whether the two hands have mutual scrubbing actions. Each normative detection result is shown on a display interface.
Patent Document 6: JP2019219554A provides a hand-washing assist system capable of assisting a worker to perform a hand-washing action in a proper manner. A hand-washing assist system includes a display unit, an imaging part configured to pick up an image of fingers of the worker during hand washing and a processing unit to display a finger image picked up by the imaging part and an exemplary hand-washing image that shows exemplary actions of a hand-washing step the worker performs from the one or more hand-washing steps on the same screen of the display unit.
Patent Document 7: WO2020044351A1 describes a hand washing system, comprising a reagent and water dispensing unit connected to a server. The dispensing unit comprises a personal identification unit, a reagent dispenser, a connection to a water source, one or more sensors for monitoring the handwashing act, and a controller comprising processor and memory for operating the dispensing unit and for storing handwashing data parameters. The server receives and analyzes handwashing data parameters. When an individual approaches the dispensing unit the identification unit identifies the individual, the one or more sensors confirm that the individual's hands are at location apt for receiving reagent from the reagent dispenser and water for at least a predetermined amount of time and the processor sends the server handwashing data parameters.

### Summary of the Invention

### Problem to be Solved by the Invention

In handwashing, detergent (including soap or chemicals) is often used. However, the conventional technology does not decide whether detergent is used appropriately.

An object of one aspect of the present invention is to provide a method for accurately deciding whether a handwash has been performed by using detergent appropriately.

### Means for Solving the Problem

The object of the invention is solved by the subject matter of the independent claims. Advantageous embodiments are disclosed in the dependent claims.

### Effects of the Invention

According to the above-described aspect, it is possible to accurately decide whether a handwash has been performed by using detergent appropriately.

### Brief Description of Drawings

FIG. 1 illustrates an example of a handwash monitoring system according to an embodiment of the present invention.
FIG. 2 illustrates an example of a hand-washing steps.
FIG. 3 illustrates an example of a decision method by the handwash monitoring system.
FIG. 4 is a flowchart illustrating an example of a process of the handwash monitoring system.
FIG. 5 is a flowchart illustrating an example of a process for deciding detergent foam.
FIG. 6 illustrates an example of an operation of the handwash monitoring system.
FIG. 7 illustrates an example of a threshold for deciding an amount of foam.
FIG. 8 illustrates another example of the threshold for deciding the amount of foam.
FIG. 9 illustrates still another example of the threshold for deciding the amount of foam.

### Embodiments of the Invention

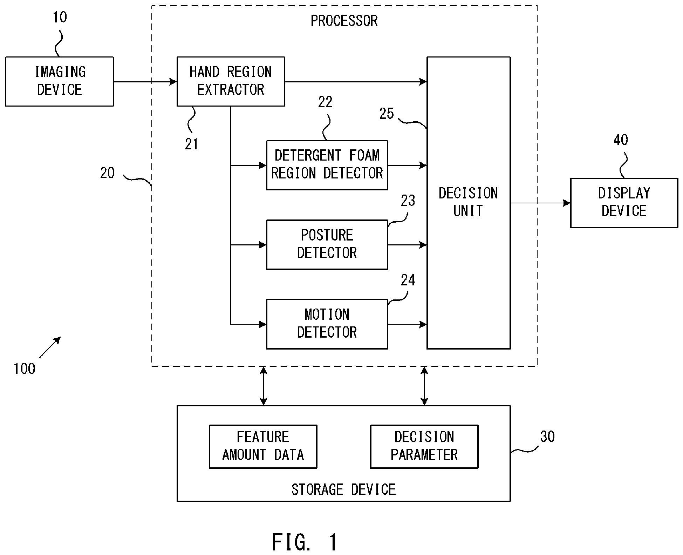

FIG. 1 illustrates an example of a handwash monitoring system according to an embodiment of the present invention. The handwash monitoring system 100 according to an embodiment of the present invention includes, as illustrated in FIG. 1, an imaging device 10, a hand region extractor 21, a detergent foam region detector 22, a posture detector 23, a motion detector 24, a decision unit 25, a storage device 30, and a display device 40. Note that the handwash monitoring system 100 may include other functions or devices not illustrated in FIG. 1.

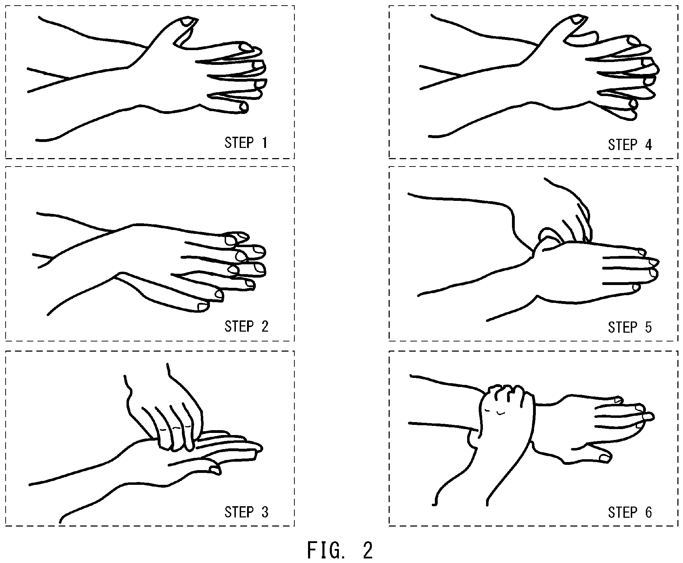

The handwash monitoring system 100 monitors a hand-washing motion of a person and decides whether the handwashing is being performed correctly. Here, it is assumed that the handwashing monitored by the handwash monitoring system 100 includes a plurality of steps determined in advance. Specifically, the handwashing includes, but is not limited to, operation steps 1-6 illustrated in FIG. 2. Note that the operation steps 1-6 are as follows.
Step 1: Wet palms in running water, then apply a detergent and scrub the palms together.
Step 2: Scrub the back of one hand with the palm of the other hand.
Step 3: Wash between fingertips and nails.
Step 4: Wash between fingers.
Step 5: Wash the thumb and the base thereof with a twisting motion.
Step 6: Wash the wrist.

The imaging device 10 is, for example, a digital camera and acquires color images by image capturing. Here, the imaging device 10 acquires images at specified time intervals (for example, 30 frames/second) . Therefore, the imaging device 10 can substantially acquire a moving image. The imaging device 10 is installed, for example, above a sink where a person washes hands. The imaging device 10 captures an image of a motion of a person washing hands. Note that in the following description, a person whose hand-washing motion is captured by the imaging device 10 may be referred to as a "user". The user is, but is not limited to, a worker of food-related businesses, for example.

The hand region extractor 21 extracts a hand region corresponding to a hand of the user from the image captured by the imaging device 10. The method for extracting the hand region from the input image is not particularly limited and can be implemented by known techniques. For example, the hand region extractor 21 may extract the hand region when performing a handwash including foam from the input image by using learned semantic segmentation.

The detergent foam region detector 22 detects a color component designated in advance in the hand region extracted by the hand region extractor 21. Here, the detergent foam region detector 22 detects, for example, the color component corresponding to a detergent designated in advance. In this case, it is estimated that the region where this color component is detected corresponds to detergent foam attached to the hand of the user. Therefore, the detergent foam region detector 22 can detect the detergent foam attached to the hand of the user. Note that in the following description, the region having the color component designated in advance in the hand region may be referred to as a "detergent foam region". In the following description, it is assumed that the detergent includes soaps and chemicals.

The color of the detergent foam is gray close to white in many cases. Therefore, the detergent foam region detector 22 detects the detergent foam region, for example, by detecting a gray component in the hand region. However, the color of the detergent foam varies from detergent to detergent. Therefore, if the type of detergent used by the user is known, the detergent foam region detector 22 preferably detects the color component corresponding to the detergent. For example, some medicated soap with strong disinfecting properties have a yellow foam color. In this case, the detergent foam region detector 22 detects the detergent foam region by detecting the yellow color component in the hand region.

The posture detector 23 detects which operation step of a plurality of operation steps determined in advance the user is performing based on the shape of the hand region. In this embodiment, it is assumed that performing six operation steps illustrated in FIG. 2 in order is recommended. In this case, the posture detector 23 recognizes which operation in the operation steps 1-6 the user is performing. Note that the storage device 30 stores feature amount data created in advance to recognize each operation step. The feature amount data represents, for example, the posture of left and right hands and the angle of fingers. The posture detector 23 may use this feature amount data to recognize the operation step by image classification deep learning.

The motion detector 24 counts the number of repeated motions of the user based on the motion of the hand region. For example, the motion detector 24 counts the number of repetitions of the operation of scrubbing the back of one hand with the palm of the other hand. Note that the motion detector 24 may count the number of repetitions, for example, by deep learning to detect the cycle of image change from a plurality of image frames obtained on a time-series basis. As one example, the motion detector 24 counts the number of repetitions by using live repetition counting and the like.

The decision unit 25 decides whether the hand-washing motion of the user satisfies a specified condition based on the proportion of the detergent foam region to the hand region. For example, it is decided whether the correct handwashing is being performed using a sufficient amount of detergent. Here, it is assumed that if the user performs the correct handwashing by using a sufficient amount of detergent, a sufficient amount of detergent foam will be generated. That is, it is estimated that as the proportion of the area of the detergent foam region to the area of the hand region increases, the amount of detergent foam attached to the hand of the user increases. Therefore, in this case, the decision unit 25 decides that when the proportion of the area of the detergent foam region to the area of the hand region is greater than a specified proportion threshold, the hand-washing motion of the user satisfies the condition. Note that the area of the hand region is calculated by counting the number of pixels in the hand region. The area of the detergent foam region is calculated by counting the number of pixels of the color component designated in the hand region.

The decision unit 25 may decide whether the hand-washing motion of the user has been appropriately performed for each operation step illustrated in FIG. 2. Which operation step the user is performing is detected by the posture detector 23. The proportion threshold for deciding whether the amount of detergent foam is appropriate is preferably determined for each operation step. Note that the proportion threshold is, for example, stored in the storage device 30 as one of decision parameters.

The decision unit 25 may decide whether the repeated notion has been performed a specified number of times in each operation step. For example, the decision unit 25 decides whether the operation of scrubbing the back of one hand with the palm of the other hand has been performed 10 times or more in the operation step 2. Note that the threshold of the number of repetitions is, for example, stored in the storage device 30 as one of decision parameters.

The display device 40 displays the decision result made by the decision unit 25. For example, when the handwashing is performed correctly, "OK" is displayed on the display device 40. Meanwhile, when the handwashing is not performed correctly, a message indicating that the handwashing is not performed correctly is displayed on the display device 40. In this case, the message may be displayed in each operation step. A message indicating what needs to be improved may be displayed. For example, a message such as "Foam is insufficient" or "Scrub more" is displayed on the display device 40.

Note that the hand region extractor 21, the detergent foam region detector 22, the posture detector 23, the motion detector 24, and the decision unit 25 are implemented by the processor 20 executing a handwash monitoring program. That is, by the processor 20 executing the handwash monitoring program, functions of the hand region extractor 21, the detergent foam region detector 22, the posture detector 23, the motion detector 24, and the decision unit 25 are provided. In this case, the handwash monitoring program is stored, for example, in the storage device 30. Alternatively, the processor 20 may execute the handwash monitoring program recorded in a portable storage medium that is not illustrated in the drawings. Furthermore, the processor 20 may acquire and execute the handwash monitoring program from a program server that is not illustrated in the drawings.

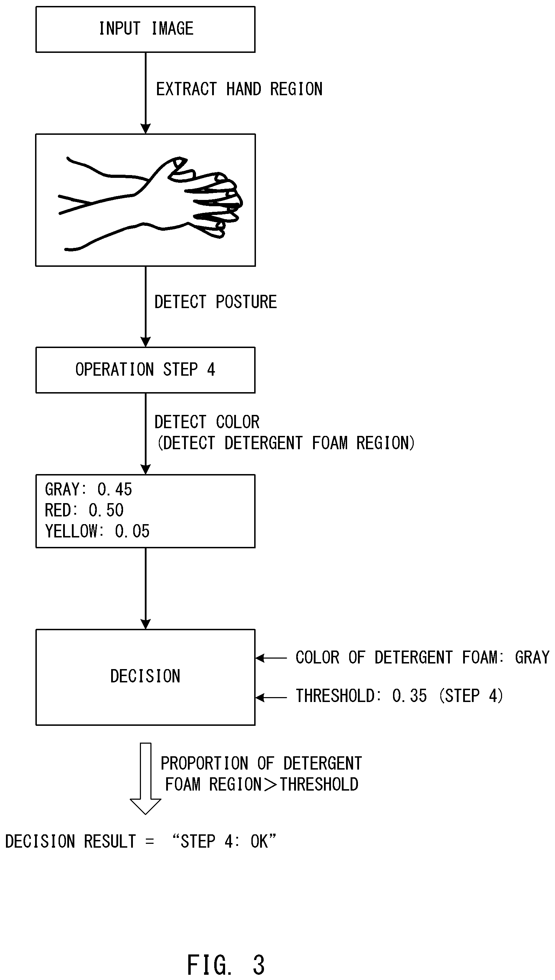

FIG. 3 illustrates an example of a decision method made by the handwash monitoring system 100. In this example, the image captured by the imaging device 10 is provided to the processor 20. The storage device 30 stores the feature amount data for deciding the posture of a hand of the user and the decision parameters used by the decision unit 25
The hand region extractor 21 extracts the hand region from the input image. The posture detector 23 detects the posture of a hand of the user from the input image or the hand region data obtained by the hand region extractor 21 by using the feature amount data. Specifically, the posture detector 23 detects the operation step the user is performing from among the operation steps 1-6 illustrated in FIG. 2. In this example, it is decided that the user is performing the operation step 4.

The detergent foam region detector 22 detects the color component designated in advance in the hand region extracted by the hand region extractor 21. In this example, the number of gray pixels, the number of red pixels, and the number of yellow pixels in the hand region are each counted. Then, for each color component, the proportion of the number of pixels counted for each color component to the number of all the pixels in the hand region is calculated. In this example, the proportions of gray, red, and yellow are "0.45", "0.50", and "0.05", respectively.

The decision unit 25 decides whether the hand-washing motion of the user has been performed correctly by using the decision parameter stored in the storage device 30. In this example, it is assumed that the detergent used by the user is determined in advance and that the color of the foam is gray. In this case, the gray region in the hand region corresponds to the detergent foam region. That is, the proportion of the detergent foam region to the hand region is "0.45". For each operation step, the proportion threshold is determined in advance. In this example, the proportion threshold for the operation step 4 is "0.35".

In this case, the proportion of the detergent foam region to the hand region is greater than the proportion threshold for the operation step 4. That is, in the operation step 4, the amount of detergent foam attached to the hand of the user is greater than the required amount determined in advance for the operation step 4. Therefore, the decision unit 25 decides that the hand-washing motion in the operation step 4 has been performed correctly. This decision result is displayed on the display device 40.

Note that in the example illustrated in FIG. 3, the decision is made for the operation step 4, but the handwash monitoring system 100 may make a decision for each operation step. In this case, the operation steps 1-6 are preferably performed in order. Therefore, if the handwashing is not performed in the specified order, the handwash monitoring system 100 may output an alarm message. Note that the posture detector 23 decides whether the user is performing the handwashing in the specified order.

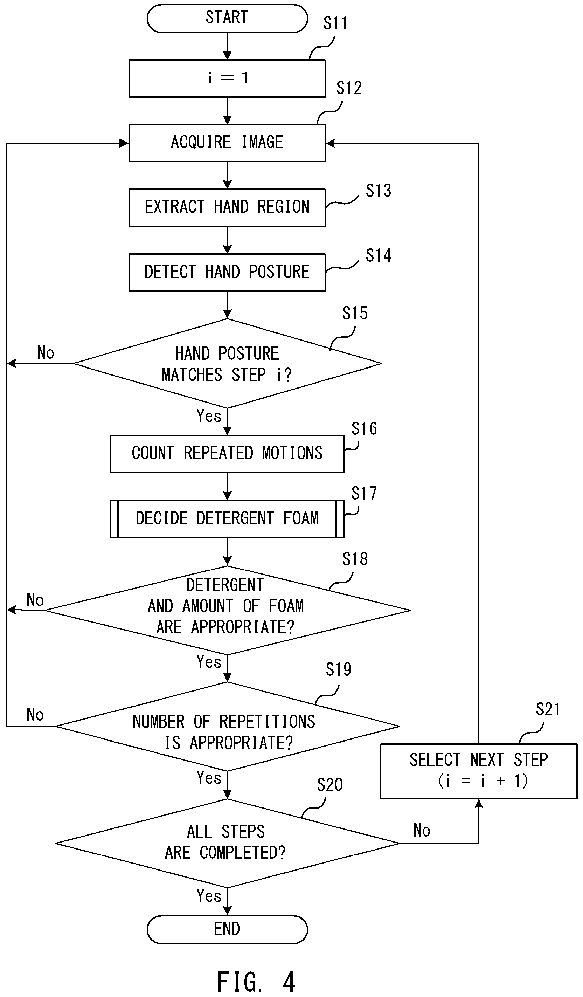

FIG. 4 is a flowchart illustrating an example of a process of the handwash monitoring system 100. Note that, for example, when the user is located in front of the sink, the imaging device 10 continuously captures images. In this embodiment, the handwash monitoring system 100 monitors that the operation steps 1-6 illustrated in FIG. 2 are performed in order.

In S11, the processor 20 initializes the variable i to 1. The variable i identifies the operation steps 1-6 illustrated in FIG. 2. In S12, the processor 20 acquires the image captured by the imaging device 10. Note that the processor 20 continuously acquires the image captured by the imaging device 10.

In S13, the hand region extractor 21 extracts the hand region from the image acquired by the processor 20. The extraction of the hand region is performed, for example, using semantic segmentation. At this time, the hand region extractor 21 may provide guidance such that the user washes hands in a specified area of the sink. In this case, the hand region extractor 21 can extract the hand region from the specified area in the input image, thereby reducing the amount of image recognition processing.

In S14 to S15, the posture detector 23 detects the posture of a hand of the user based on the input image and/or the hand region extracted by the hand region extractor 21. Then, the posture detector 23 decides whether the posture of a hand of the user matches the posture of the hand in the operation step i. At this time, the posture detector 23 may refer to the feature amount data stored in the storage device 30 to make a decision by deep learning such as Resnet.

When the posture of a hand of the user does not match the posture of the hand in the operation step i, the process of the processor 20 returns to S12. At this time, the posture detector 23 may output a message to the user stating that the operation step i should be performed. Meanwhile, when the posture of a hand of the user matches the posture of the hand in the operation step i, the process of the processor 20 proceeds to S16.

In S16, the motion detector 24 counts the number of repeated motions in the operation step i. For example, when the operation step 1 is performed by the user, the number of operations of scrubbing palms together is counted. When the operation step 2 is performed by the user, the operation of scrubbing the back of the one hand with the palm of the other hand is counted. At this time, the motion detector 24 may count the number of repetitions by live repetition counting (LRC) or the like.

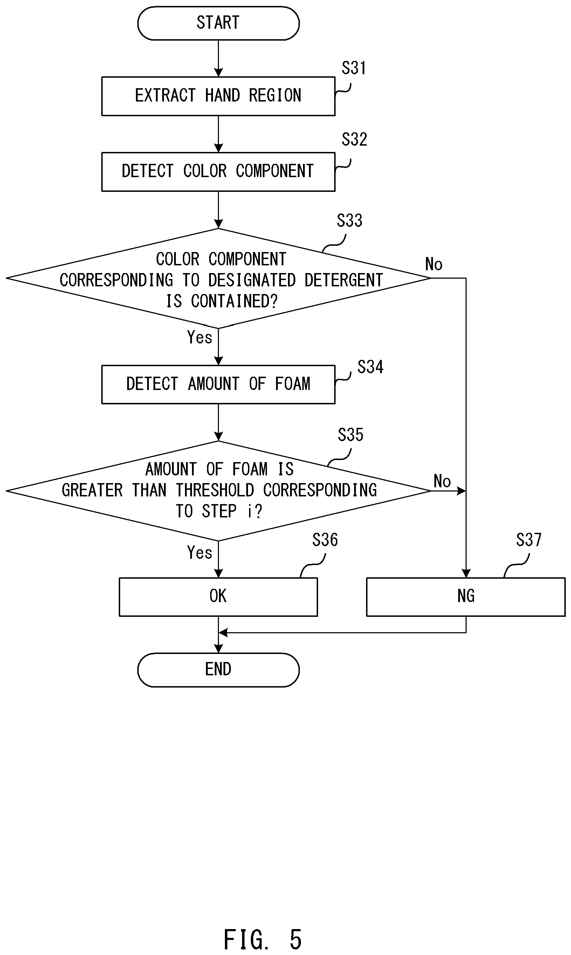

In S17 to S18, the detergent foam region detector 22 decides whether the user is performing a handwash with the sufficient amount of foam by using the proper detergent. Note that this decision will be described later with reference to FIG. 5.

When the user is not using the proper detergent, or when the amount of foam is insufficient, the process of the processor 20 returns to S12. At this time, the decision unit 25 may output a message prompting the user to use the appropriate detergent, or a message prompting the user to perform a handwash with the sufficient amount of foam. Meanwhile, when the user uses the appropriate detergent and the amount of foam is sufficient, the process of the processor 20 proceeds to S19.

In S19, the decision unit 25 decides whether the number of repetitions counted in S16 is appropriate. As one example, it is decided whether the number of repetitions counted in S16 is equal to or greater than a specified threshold. That is, when the number of repeated motions performed is equal to or greater than the threshold, the decision unit 25 decides that the user has performed handwashing correctly. Note that the threshold may be determined in advance for each operation step.

When the number of repeated motions by the user is less than the threshold, the process of the processor 20 returns to S12. At this time, the decision unit 25 may output a message to the user indicating that the number of repeated motions is insufficient. Meanwhile, when the number of repeated motions by the user is equal to or greater than the threshold, the processor 20 decides in S20 whether the process of S12 to S19 has been performed for all the operation steps. As a result, when the operation step in which the process of S12 to S19 has not been performed remains, the variable i is incremented in S21. That is, the next operation step is selected. After this, the process of the processor 20 returns to S12. Then, when the process of S12 to S19 is completed for all the operation steps, the handwash monitoring process ends.

FIG. 5 is a flowchart illustrating an example of a process for deciding the detergent foam. The process in this flowchart corresponds to S17 in the flowchart illustrated in FIG. 4 and is performed by the detergent foam region detector 22. Note that it is assumed that before the detergent foam region detector 22 performs the process in this flowchart, the operation step in which the user is performing is detected.

In S31, the detergent foam region detector 22 extracts the hand region from the image acquired by the processor 20. Note that the detergent foam region detector 22 may receive data of the hand region extracted by the hand region extractor 21.

In S32, the detergent foam region detector 22 detects color components in the hand region. At this time, the detergent foam region detector 22 detects one or more color components designated in advance. For example, the detergent foam region detector 22 detects the color component corresponding to one or more detergent foams the user is expected to use.

In S33, the detergent foam region detector 22 decides whether the color components detected in S32 contain the color component corresponding to the designated detergent foam. For example, when the designated detergent foam is gray, it is decided in S32 whether the gray component is detected. Then, when the color components detected in S32 contain the color component corresponding to the designated detergent foam, the detergent foam region detector 22 decides that the user is using the appropriate detergent. In this case, the process of the detergent foam region detector 22 proceeds to S34.

In S34, the detergent foam region detector 22 detects the amount of detergent foam attached to the hand of the user. At this time, the detergent foam region detector 22 detects the color component corresponding to the designated detergent foam in the hand region. That is, the detergent foam region detector 22 detects the detergent foam region. Then, the detergent foam region detector 22 calculates the proportion of the area of the detergent foam region (or the number of pixels in the detergent foam region) to the area of the hand region (or the number of all pixels in the hand region). This proportion represents the amount of detergent foam attached to the hand of the user.

In S35, the detergent foam region detector 22 or the decision unit 25 compares the amount of foam detected in S34 (that is, the proportion of the detergent foam region to the hand region) with the specified threshold. Here, in this embodiment, the threshold is determined in advance for each operation step. That is, the detergent foam region detector 22 or the decision unit 25 compares the detected amount of foam with the threshold for the operation step i.

When the detected amount of foam is greater than the threshold, the decision unit 25 decides in S36 that the user is performing a handwash with the sufficient amount of detergent foam in the operation step i. That is, it is decided that the operation step i has been appropriately performed. Meanwhile, when the detected amount of foam is equal to or less than the threshold, the decision unit 25 decides in S37 that the detergent foam is insufficient in the operation step i. That is, it is decided that the operation step i is not appropriately performed. Note that when the color components detected in S32 do not contain the color component corresponding to the designated detergent foam, the decision unit 25 also decides in S37 that the operation step i is not appropriately performed. In this way, the detergent foam region detector 22 and the decision unit 25 decide whether the user is performing a handwash in the operation step i with the sufficient amount of foam by using the appropriate detergent.

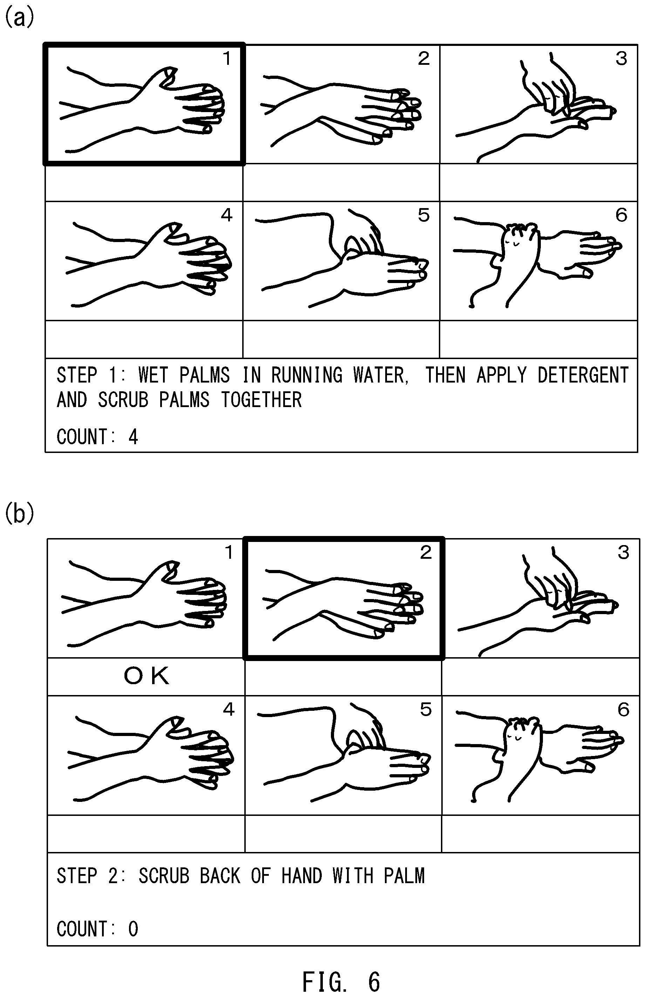

FIG. 6 illustrates an example of the operation of the handwash monitoring system 100. In this embodiment, the handwash monitoring system 100 provides guidance to the user such that the operation steps 1-6 are performed in order. Specifically, when the user is located in front of the sink, as illustrated in FIG. 6, a screen to guide the procedure for the handwashing is displayed on the display device 40.

When causing the user to perform the operation step 1, the illustration representing the operation step 1 is highlighted as illustrated in FIG. 6(a). In addition, an explanatory note of the operation step 1 is displayed. Here, "count" represents the number of repeated motions of the operation step 1 performed by the user. That is, when the user performs the specified repeating motion, the count value is counted up by one. Then, the handwash monitoring system 100 performs the process of "i=1" in the flowchart illustrated in FIG. 4.

Specifically, the handwash monitoring system 100 extracts the hand region from the input image and detects the detergent foam region. The motion detector 24 counts the number of repetitions of the specified operation by the user (operation of scrubbing hands together in the operation step 1). At this time, the count value is counted up on a screen of the display device 40. The decision unit 25 compares the proportion of the area of the detergent foam region to the area of the hand region with the specified threshold. Then, when the proportion of the area of the detergent foam region to the area of the hand region is greater than the threshold, and when the count value representing the number of repetitions reaches the specified number of times (for example, 10 times), the decision unit 25 decides that the operation step 1 has been appropriately completed. Then, the decision unit 25 displays "OK" for the operation step 1, as illustrated in FIG. 6 (b) . This display allows the user to recognize that the operation step 1 has been performed appropriately.

After this, the handwash monitoring system 100 displays guidance for the next operation step. That is, as illustrated in FIG. 6(b), the illustration representing the operation step 2 is highlighted and an explanatory note of the operation step 2 is displayed. Hereinafter, in a similar manner, it is checked one by one in turn whether each operation step has been performed appropriately. Therefore, the user can perform all the operation steps appropriately.

### Threshold of deciding the amount of foam

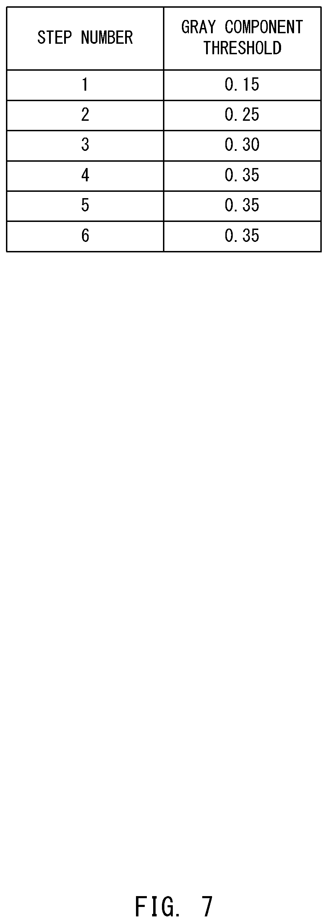

As described above, the decision unit 25 compares the proportion of the area of the detergent foam region to the area of the hand region with the threshold. Here, when the user performs a handwash using detergent, it is estimated that the amount of foam attached to the hand gradually increases over time (that is, as the number of repeated motions of scrubbing hands increases). That is, when the operation steps 1-6 illustrated in FIG. 2 are performed in order, it is estimated that the amount of foam attached to the hand gradually increases from the operation step 1 toward the operation step 6. Therefore, as illustrated in FIG. 7, the threshold for deciding whether the amount of foam is appropriate may be determined to gradually increase from the operation step 1 toward the operation step 6. Note that in the example illustrated in FIG. 7, it is assumed that the color of the detergent foam is gray. The threshold is stored in the storage device 30 illustrated in FIG. 1 as one of decision parameters.

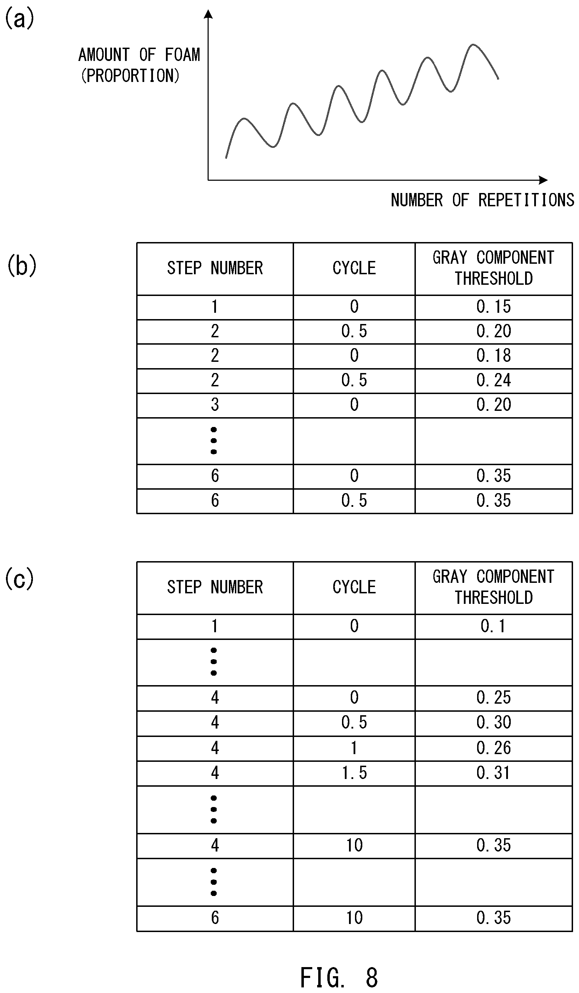

Meanwhile, in many cases, the handwashing includes a motion to move hands cyclically. Therefore, the area of the hand region and/or the area of the detergent foam region extracted from the input image varies synchronously with the cycle in which the user moves hands. That is, the amount of foam calculated based on the hand region and the detergent foam region (or the proportion of the area of the detergent foam region to the area of the hand region) varies synchronously with the cycle in which the user moves hands, as illustrated in FIG. 8(a).

Therefore, as illustrated in FIG. 8(b), the handwash monitoring system 100 may use a threshold that varies with the cycle of the repeating motion of the user for each operation step. Note that in the example illustrated in FIG. 8(b), "cycle=0" represents the timing when the minimum value of the amount of foam appears, and "cycle=0.5" represents the timing when the peak value of the amount of foam appears.

Furthermore, as illustrated in FIG. 8(a), it is estimated that as the user scrubs hands together more often, the amount of foam attached to the hands increases. Therefore, as illustrated in FIG. 8(c), the handwash monitoring system 100 may use a threshold that varies according to the cycle and the number of repeated motions of the user for each operation step. Note that in the embodiment illustrated in FIG. 8(c), "cycle = 0, 1, ..." represents the timing when the minimum value of the amount of foam appears, and "cycle = 0.5, 1.5, ..." represents the timing when the peak of the amount of foam appears.

### Variation 1

In a case where the user uses a plurality of detergents, the handwash monitoring system 100 preferably monitors the handwashing for each detergent. For example, the user may use general soap in normal times and, after certain treatment (for example, sewage treatment), the user may use medicated soap with stronger disinfecting properties. In this case, the handwash monitoring system 100 may use different thresholds for different types of detergent to decide whether the amount of foam is appropriate.

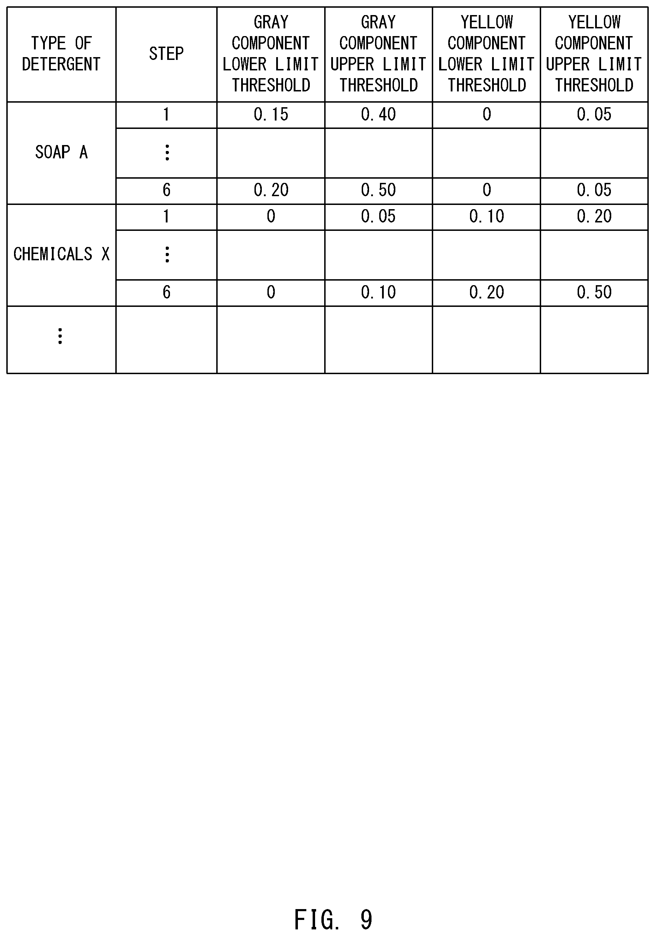

In the example illustrated in FIG. 9, the threshold range is determined for each of the soap A and chemicals X. The threshold range is determined for each operation step. The threshold range is represented in terms of lower and upper thresholds. Here, in this embodiment, it is assumed that the color of the foam of the soap A is gray and the color of the foam of the chemicals X is yellow.

The handwash monitoring system 100 decides whether the amount of foam is appropriate based on the threshold range corresponding to the detergent used by the user. Here, the type of detergent is entered, for example, by the user. In this case, the handwash monitoring system 100 provides an interface for the user to select detergent. Alternatively, the handwash monitoring system 100 may determine the detergent used by the user by image recognition. For example, when the location where each detergent (soap A, chemicals X) is placed is determined in advance, the handwash monitoring system 100 can recognize the detergent selected by the user by detecting the location and motion of a hand of the user from the input image.

After recognizing the detergent used by the user, the handwash monitoring system 100 performs the process of the flowchart illustrated in FIGS. 4 to 5. At this time, the decision unit 25 uses the threshold range illustrated in FIG. 9. For example, when the user uses the chemicals X, the decision unit 25 decides in the operation step 1 that the amount of foam is appropriate when the proportion of the area of the gray component to the area of the hand region is from 0 to 0.05, and when the proportion of the area of the yellow component to the area of the hand region is from 0.1 to 0.2.

### Variation 2

As described above, the motion detector 24 counts the number of repeated motions of the user based on the motion of the hand region. For example, the motion detector 24 counts the number of repetitions of the operation of scrubbing the back of one hand with the palm of the other hand.

However, even if the specified number of repeated motions is performed, if the repeating motion is too fast, stains may not be removed sufficiently. Therefore, when the repeating motion is performed in the specified cycle, the motion detector 24 may count the number of repetitions. For example, the handwash monitoring system 100 outputs a guidance sound in a suitable cycle as the repeating motion of a handwash. When a motion is detected in the same or almost the same cycle as the cycle in which the guidance sound is output, the motion detector 24 counts the number of motions. This function allows the user to perform a handwash at an appropriate repetition rate.

In addition, even if the specified number of repeated motions is performed, when the stroke of the hand motion (or distance travelled in a reciprocal movement) is small, stains may not be sufficiently removed. Therefore, when the repeating motion is performed with a stroke greater than a specified threshold, the motion detector 24 may count the number of motions.

### Variation 3

The decision result made by the handwash monitoring system 100 (including information indicating events still in progress) is, for example, displayed on the display device 40 as illustrated in FIG. 6. In this case, the display device 40 may display the image obtained by the imaging device 10 together with the decision result.

However, the display device 40 may have a simpler configuration. For example, the display device 40 may be a device that displays characters or symbols with a plurality of LEDs. In this case, the display device 40 displays information for identifying the current operation step, the count value representing the number of repetitions, information on whether each operation step has been completed appropriately, and the like.

The handwash monitoring system 100 may use a projection device to show the decision result (including information indicating events still in progress) to the user. For example, the user often looks at hands of the user when the user is performing a handwash. Therefore, the handwash monitoring system 100 may project the count value of the repeated motion onto the hands of the user or the sink. The handwash monitoring system 100 may project a model video of the hand-washing motion onto the sink or the like.

Note that the handwash monitoring system 100 preferably has a function of receiving an instruction of the user in a contactless manner. For example, the handwash monitoring system 100 may have a function of recognizing a voice of the user. The handwash monitoring system 100 may have a function of recognizing a gesture of the user. When this function is provided, it is possible to avoid the hand before a handwash coming into contact with the handwash monitoring system 100.

### Variation 4

As described above, HACCP requires food-related businesses to check, monitor, and record public health management behaviors. Therefore, the handwash monitoring system 100 preferably has a function of authenticating each user. For example, the handwash monitoring system 100 may include a venous sensor that detects veins in the hand. In this case, the venous pattern of each user is registered in advance. Then, the user is determined by comparing the venous pattern detected by the venous sensor with the registered venous pattern. Alternatively, the handwash monitoring system 100 may perform face authentication using camera images. For example, if the imaging device 10 is a pan-tilt-zoom camera, the handwash monitoring system 100 performs face authentication using output images of the imaging device 10. Subsequently, the handwash monitoring system 100 changes the capturing direction of the imaging device 10 and performs handwash monitoring. Note that the handwash monitoring system 100 may include a camera for face authentication, separately from the imaging device 10.

### Reference Sign List

- 10: imaging device
- 20: processor
- 21: hand region extractor
- 22: detergent foam region detector
- 23: posture detector
- 24: motion detector
- 25: decision unit
- 30: storage device
- 40: display device
- 100: handwash monitoring system

## Claims

1. A handwash monitoring system comprising:
an imaging unit (10);
a hand region extractor (21) configured to extract a hand region corresponding to a hand of a user from an image captured by the imaging unit;
a detergent foam region detector (22) configured to detect a detergent foam region having a color component corresponding to the detergent designated in advance in the hand region;
a motion detector (24) configured to count a number of repeated motions of the user based on a motion of the hand region; and
a decision unit (25) configured to decide whether a hand-washing motion of the user satisfies a specified condition based on a proportion of the detergent foam region to the hand region, wherein
the motion detector (24) counts the number of repeated motions when a cycle of a repeating motion of the user is identical or nearly identical to a designated cycle, and
the decision unit (25) decides that the hand washing motion of the user satisfies the specified condition when the proportion is greater than a specified proportion threshold and the number of repeated motions of the user is greater than a specified number threshold.

2. The handwash monitoring system according to claim 1, wherein
the detergent foam region detector (22) detects the detergent foam region having the color component corresponding to a detergent designated in advance.

3. The handwash monitoring system according to claim 2, further comprising
a posture detector (23) configured to detect which operation step among a plurality of operation steps determined in advance the user is performing, based on a shape of the hand region, wherein
the decision unit (25) decides whether the hand-washing motion of the user satisfies the specified condition by using the proportion threshold corresponding to the operation step detected by the posture detector.

4. The handwash monitoring system according to claim 2, wherein
the proportion threshold is determined based on a type of detergent used by the user.

5. The handwash monitoring system according to claim 4, wherein
the decision unit (25) estimates the type of detergent used by the user based on the image captured by the imaging unit.

6. A processor implemented handwash monitoring method comprising:
extracting a hand region corresponding to a hand of a user from an image captured by an imaging device;
detecting a detergent foam region having a color component corresponding to the detergent designated in advance in the hand region;
counting a number of repeated motions of the user based on a motion of the hand region; and
deciding whether a hand-washing motion of the user satisfies a specified condition based on a proportion of the detergent foam region to the hand region,
counting the number of repeated motions when a cycle of a repeating motion of the user is identical or nearly identical to a designated cycle, and
deciding that the hand washing motion of the user satisfies the specified condition when the proportion is greater than a specified proportion threshold and the number of repeated motions of the user is greater than a specified number threshold.

7. A handwash monitoring program which when executed by a processor causes the processor to execute a handwash monitoring process comprising:
extracting a hand region corresponding to a hand of a user from an image captured by an imaging device;
detecting a detergent foam region having a color component corresponding to the detergent designated in advance in the hand region;
counting a number of repeated motions of the user based on a motion of the hand region; and
deciding whether a hand-washing motion of the user satisfies a specified condition based on a proportion of the detergent foam region to the hand region
counting the number of repeated motions when a cycle of a repeating motion of the user is identical or nearly identical to a designated cycle, and
deciding that the hand washing motion of the user satisfies the specified condition when the proportion is greater than a specified proportion threshold and the number of repeated motions of the user is greater than a specified number threshold.

## Patentansprüche

1. Handwaschüberwachungssystem, umfassend:
eine Bildgebungseinheit (10);
einen Handbereichsextrahierer (21), der so konfiguriert ist, dass er einen Handbereich entsprechend einer Hand eines Benutzers aus einem von der Bildgebungseinheit aufgenommenen Bild extrahiert;
einen Reinigungsmittelschaumbereichsdetektor (22), der so konfiguriert ist, dass er einen Reinigungsmittelschaumbereich mit einer Farbkomponente detektiert, die dem zuvor in dem Handbereich festgelegten Reinigungsmittel entspricht;
einen Bewegungsdetektor (24), der so konfiguriert ist, dass er eine Anzahl wiederholter Bewegungen des Benutzers auf der Grundlage einer Bewegung des Handbereichs zählt; und
eine Entscheidungseinheit (25), die so konfiguriert ist, dass sie auf der Grundlage eines Verhältnisses des Reinigungsmittelschaumbereichs zu dem Handbereich entscheidet, ob eine Handwaschbewegung des Benutzers eine spezifizierte Bedingung erfüllt, wobei
der Bewegungsdetektor (24) die Anzahl der wiederholten Bewegungen zählt, wenn ein Zyklus einer sich wiederholenden Bewegung des Benutzers identisch oder nahezu identisch mit einem festgelegten Zyklus ist, und
die Entscheidungseinheit (25) entscheidet, dass die Handwaschbewegung des Benutzers die spezifizierte Bedingung erfüllt, wenn das Verhältnis größer als ein spezifizierter Verhältnisschwellenwert ist und die Anzahl der wiederholten Bewegungen des Benutzers größer als ein spezifizierter Anzahlschwellenwert ist.

2. Handwaschüberwachungssystem nach Anspruch 1, wobei
der Reinigungsmittelschaumbereichsdetektor (22) den Reinigungsmittelschaumbereich mit der Farbkomponente detektiert, die einem zuvor festgelegten Reinigungsmittel entspricht.

3. Handwaschüberwachungssystem nach Anspruch 2, weiter umfassend
einen Haltungsdetektor (23), der so konfiguriert ist, dass er basierend auf einer Form des Handbereichs detektiert, welchen Arbeitsschritt von einer Vielzahl von zuvor bestimmten Arbeitsschritten der Benutzer gerade durchführt, wobei
die Entscheidungseinheit (25) unter Verwendung des Verhältnisschwellenwerts entsprechend des von dem Haltungsdetektor detektierten Arbeitsschritts entscheidet, ob die Handwaschbewegung des Benutzers die spezifizierte Bedingung erfüllt.

4. Handwaschüberwachungssystem nach Anspruch 2, wobei
der Verhältnisschwellenwert basierend auf einem von dem Benutzer verwendeten Reinigungsmitteltyps bestimmt wird.

5. Handwaschüberwachungssystem nach Anspruch 4, wobei
die Entscheidungseinheit (25) den von dem Benutzer verwendeten Reinigungsmitteltyp basierend auf dem von der Bildgebungseinheit aufgenommenen Bild schätzt.

6. Durch einen Prozessor implementiertes Handwaschüberwachungsverfahren, umfassend:
Extrahieren eines Handbereichs, der einer Hand eines Benutzers entspricht, aus einem von einer Bildgebungsvorrichtung aufgenommenen Bild;
Detektieren eines Reinigungsmittelschaumbereichs mit einer Farbkomponente, die dem zuvor in dem Handbereich festgelegten Reinigungsmittel entspricht;
Zählen einer Anzahl wiederholter Bewegungen des Benutzers basierend auf einer Bewegung des Handbereichs; und
Entscheiden, ob eine Handwaschbewegung des Benutzers eine spezifizierte Bedingung erfüllt, basierend auf einem Verhältnis des Reinigungsmittelschaumbereichs zu dem Handbereich,
Zählen der Anzahl wiederholter Bewegungen, wenn ein Zyklus einer sich wiederholenden Bewegung des Benutzers identisch oder nahezu identisch mit einem festgelegten Zyklus ist, und
Entscheiden, dass die Handwaschbewegung des Benutzers die spezifizierte Bedingung erfüllt, wenn das Verhältnis größer als ein spezifizierter Verhältnisschwellenwert ist und die Anzahl wiederholter Bewegungen des Benutzers größer als ein spezifizierter Anzahlschwellenwert ist.

7. Handwaschüberwachungsprogramm, das bei Ausführung durch einen Prozessor den Prozessor veranlasst, einen Handwaschüberwachungsprozess auszuführen, der Folgendes umfasst:
Extrahieren eines Handbereichs, der einer Hand eines Benutzers entspricht, aus einem von einer Bildgebungsvorrichtung aufgenommenen Bild;
Detektieren eines Reinigungsmittelschaumbereichs mit einer Farbkomponente, die dem zuvor in dem Handbereich festgelegten Reinigungsmittel entspricht;
Zählen einer Anzahl wiederholter Bewegungen des Benutzers basierend auf einer Bewegung des Handbereichs; und
Entscheiden, ob eine Handwaschbewegung des Benutzers eine spezifizierte Bedingung erfüllt, basierend auf einem Verhältnis des Reinigungsmittelschaumbereichs zu dem Handbereich
Zählen der Anzahl wiederholter Bewegungen, wenn ein Zyklus einer sich wiederholenden Bewegung des Benutzers identisch oder nahezu identisch mit einem festgelegten Zyklus ist, und
Entscheiden, dass die Handwaschbewegung des Benutzers die spezifizierte Bedingung erfüllt, wenn das Verhältnis größer als ein spezifizierter Verhältnisschwellenwert ist und die Anzahl wiederholter Bewegungen des Benutzers größer als ein spezifizierter Anzahlschwellenwert ist.

## Revendications

1. Système de surveillance de lavage de mains comprenant :
une unité d'imagerie (10) ;
un extracteur (21) de région de la main configuré pour extraire une région de la main correspondant à une main d'un utilisateur à partir d'une image capturée par l'unité d'imagerie ;
un détecteur (22) de région de mousse de détergent configuré pour détecter une région de mousse de détergent présentant une composante de couleur correspondant au détergent désigné au préalable dans la région de la main ;
un détecteur de mouvement (24) configuré pour compter un nombre de mouvements répétés de l'utilisateur sur la base d'un mouvement de la région de la main ; et
une unité de décision (25) configurée pour décider si un mouvement de lavage de mains de l'utilisateur satisfait à une condition spécifiée sur la base d'une proportion de la région de mousse de détergent par rapport à la région de la main, dans lequel
le détecteur de mouvement (24) compte le nombre de mouvements répétés lorsqu'un cycle d'un mouvement répétitif de l'utilisateur est identique ou presque identique à un cycle désigné, et
l'unité de décision (25) décide que le mouvement de lavage de mains de l'utilisateur satisfait à la condition spécifiée lorsque la proportion est supérieure à un seuil de proportion spécifié et que le nombre de mouvements répétés de l'utilisateur est supérieur à un seuil de nombre spécifié.

2. Système de surveillance de lavage de mains selon la revendication 1, dans lequel
le détecteur (22) de région de mousse de détergent détecte la région de mousse de détergent présentant la composante de couleur correspondant à un détergent désigné à l'avance.

3. Système de surveillance de lavage de mains selon la revendication 2, comprenant en outre
un détecteur de posture (23) configuré pour détecter quelle étape d'opération parmi une pluralité d'étapes d'opération déterminées à l'avance l'utilisateur effectue, sur la base d'une forme de la région de la main, dans lequel
l'unité de décision (25) décide si le mouvement de lavage de mains de l'utilisateur satisfait à la condition spécifiée en utilisant le seuil de proportion correspondant à l'étape d'opération détectée par le détecteur de posture.

4. Système de surveillance de lavage de mains selon la revendication 2, dans lequel
le seuil de proportion est déterminé sur la base d'un type de détergent utilisé par l'utilisateur.

5. Système de surveillance de lavage de mains selon la revendication 4, dans lequel
l'unité de décision (25) estime le type de détergent utilisé par l'utilisateur sur la base de l'image capturée par l'unité d'imagerie.

6. Procédé de surveillance de lavage de mains mis en œuvre par un processeur comprenant :
l'extraction d'une région de la main correspondant à une main d'un utilisateur à partir d'une image capturée par un dispositif d'imagerie ;
la détection d'une région de mousse de détergent présentant une composante de couleur correspondant au détergent désigné au préalable dans la région de la main ;
le comptage d'un nombre de mouvements répétés de l'utilisateur sur la base d'un mouvement de la région de la main ; et
le fait de décider si un mouvement de lavage de mains de l'utilisateur satisfait à une condition spécifiée sur la base d'une proportion de la région de mousse de détergent par rapport à la région de la main,
le comptage du nombre de mouvements répétés lorsqu'un cycle d'un mouvement répétitif de l'utilisateur est identique ou presque identique à un cycle désigné, et
le fait de décider que le mouvement de lavage de mains de l'utilisateur satisfait à la condition spécifiée lorsque la proportion est supérieure à un seuil de proportion spécifié et que le nombre de mouvements répétés de l'utilisateur est supérieur à un seuil de nombre spécifié.

7. Programme de surveillance de lavage de mains qui, lorsqu'il est exécuté par un processeur, amène le processeur à exécuter un processus de surveillance de lavage de mains comprenant :
l'extraction d'une région de la main correspondant à une main d'un utilisateur à partir d'une image capturée par un dispositif d'imagerie ;
la détection d'une région de mousse de détergent présentant une composante de couleur correspondant au détergent désigné au préalable dans la région de la main ;
le comptage d'un nombre de mouvements répétés de l'utilisateur sur la base d'un mouvement de la région de la main ; et
le fait de décider si un mouvement de lavage de mains de l'utilisateur satisfait à une condition spécifiée sur la base d'une proportion de la région de mousse de détergent par rapport à la région de la main
le comptage du nombre de mouvements répétés lorsqu'un cycle d'un mouvement répétitif de l'utilisateur est identique ou presque identique à un cycle désigné, et
le fait de décider que le mouvement de lavage de mains de l'utilisateur satisfait à la condition spécifiée lorsque la proportion est supérieure à un seuil de proportion spécifié et que le nombre de mouvements répétés de l'utilisateur est supérieur à un seuil de nombre spécifié.
